# EUROPÄISCHE PATENTSCHRIFT

(11) **EP 3 981 085 B1**
(45) Veröffentlichungstag und Bekanntmachung des Hinweises auf die Patenterteilung: **27.09.2023**
(21) Anmeldenummer: 20731414.7
(22) Anmeldetag: 02.06.2020
(51) Int. Cl.: H04B 7/06, H04W 4/40

(54) **KRAFTFAHRZEUG MIT ANTENNENNETZWERK**
MOTOR VEHICLE WITH ANTENNA NETWORK
VÉHICULE À MOTEUR À RÉSEAU D'ANTENNES

(30) Priorität: 04.06.2019 DE 102019208098
(43) Veröffentlichungstag der Anmeldung: 13.04.2022
(73) Patentinhaber: Continental Automotive Technologies GmbH, 30165 Hannover (DE)
(72) Erfinder: SMITS, Thomas, 60488 Frankfurt am Main (DE)
(74) Vertreter: Continental Corporation
(86) Internationale Anmeldenummer: PCT/EP2020/065195
(87) Internationale Veröffentlichungsnummer: WO 2020/245107

(56) Entgegenhaltungen:
- WO-A1-2019/206995
- DE-A1-102016 226 053
- US-A1- 2018 192 464

## Beschreibung

Die Erfindung betrifft ein Kraftfahrzeug mit einem Antennennetzwerk, das mehrere aktive Antenneneinheiten aufweist, die digital miteinander verbunden sind.

Im Kraftfahrzeugbereich, insbesondere im Bereich von Nutzfahrzeugen wie LKWs, Baumaschinen oder Landmaschinen, ergeben sich für eine drahtlose Kommunikation bzw. Datenübertragung zwischen Kraftfahrzeugen bzw. zwischen Kraftfahrzeugen und einer Infrastruktur bzw. weiteren Endgeräten oder technischer Ausrüstung aufgrund der spezifischen kommunikationstechnischen Eigenschaften diverse Herausforderungen. Durch die Mobilität bzw. die nicht stationäre Benutzung ergeben sich erhöhte Anforderungen durch Mehrwegeausbreitung und resultierende Fading-Effekte, Doppler-Effekte usw.. Weiter sind insbesondere durch die geometrischen Ausmaße der Nutzfahrzeuge und konstruktionstechnische Vorgaben für mögliche Einbaupositionen von Sende-/Empfangsantennen, Verstärker, Empfänger usw. Grenzen in der Anordnung gesetzt. Zusätzlich sind Fahrzeugchassis und Aufbauten überwiegend aus Metall konstruiert, welche zu Reflektionen, Abschattungen oder Absorptionen führen. Ein weiterer Aspekt, der zu beachten ist, ist die Kostensensitivität im Automotivbereich und der Bedarf nach robusten, verlässlichen und zusätzlich ökonomischen Lösungen.

In einer klassischen Architektur werden Sende- und/oder Empfangsantennen sowie die zugehörigen Endstufen bzw. Verstärker innerhalb des jeweiligen Kraftfahrzeuges analog über Koaxialkabel verbunden. Um jedoch die Dämpfungsverluste der Koaxialkabel möglichst gering zu halten, ist es gewünscht, die Kabellängen möglichst kurz zu halten. Koaxialkabel mit geringen Dämpfungswerten, insbesondere in einem Frequenzbereich von 5 GHz bis 5,9 GHz erzeugen relativ hohe Kosten. Weiter sind die limitierten Biegeradien der Koaxialkabel sehr nachteilig.

Daher ist es bekannt, sogenannte Kompensatorschaltungen antennennah zu platzieren, die die Signale sowohl empfangs- als auch sendeseitig verstärken, um so die Dämpfungsverluste ausgleichen zu können. Da diese Kompensatorschaltungen die Signale in analoger Form verstärken, ergeben sich Nachteile durch die Verstärkung von Verzerrungen und Nicht-Linearitäten, Rauschen und dem Umschalten, das zwischen dem Senden und Empfangen nötig wird.

Die nicht vorveröffentlichte DE 10 2018 206 598 mit dem Titel "Verfahren zum Betreiben einer Antenneneinheit, Antenneneinheit und Antennennetzwerk" beschreibt ein Antennennetzwerk, in dem mehrere Antennen digital miteinander verbunden sind, um so für ein Kraftfahrzeug eine zuverlässige Kommunikationsverbindung zu externen Kommunikationseinrichtungen außerhalb des Antennennetzwerks zu ermöglichen.

Aus DE 10 2016 226 053 A1 ist ein Fahrzeug-zu-X-Kommunikationssystem für ein Fahrzeug bekannt. Das Kommunikationssystem umfasst eine erste und eine zweite Antenne sowie einen ersten Transceiver zum Senden und Empfangen eines Signales, der mit der ersten Antenne über eine erste Antennenschnittstelle elektrisch verbindbar ist, und einen zweiten Transceiver zum Senden und Empfangen eines Signales, der über eine zweite Antennenschnittstelle mit der zweiten Antenne elektrisch verbindbar ist. Ferner umfasst das Kommunikationssystem eine Steuerungsvorrichtung. Der erste Transceiver und der zweite Transceiver sind ausgebildet, unabhängig voneinander mit der Steuerungsvorrichtung zu kommunizieren.

Weiterhin ist aus US 2018/192464 A1 ein Verfahren für ein Benutzergerät zum Empfangen eines Dienstes von einem Netzwerk in einem drahtlosen Kommunikationssystem bekannt, wobei das Benutzergerät mehrere Antenneneinheiten aufweist.

Aufgabe der vorliegenden Erfindung ist es, ein Kraftfahrzeug mit einem solchen Antennennetzwerk vorzuschlagen, das eine vorteilhafte Architektur aufweist. Diese Aufgabe wird mit einem Kraftfahrzeug mit der Merkmalskombination des Anspruches 1 gelöst.

Vorteilhafte Ausgestaltungen der Erfindung sind Gegenstand der abhängigen Ansprüche.

Ein Kraftfahrzeug, insbesondere ein Nutzfahrzeug wie ein LKW, weist eine von wenigstens vier Seitenflächen definierte Zugmaschine und ein Antennennetzwerk mit wenigstens zwei Antenneneinheiten auf, denen eine gleiche Netzwerkadresse zugeordnet ist. Die wenigstens zwei Antenneneinheiten sind an unterschiedlichen Seitenflächen der wenigstens vier Seitenflächen der Zugmaschine angeordnet und weisen jeweils wenigstens eine Antenne und eine Netzwerkschnittstelle auf. Die Netzwerkschnittstellen der wenigstens zwei Antenneneinheiten sind dazu ausgebildet, ein an die wenigsten zwei Antenneneinheiten gesendetes Datenpaket mit gleichem Dateninhalt zu empfangen, auf Basis eines vorgegebenen Kommunikationsprotokolls jeweils ein Sendedatenpaket bereitzustellen, das den Dateninhalt des empfangenen Datenpakets und die zugeordnete, gleiche Netzwerkadresse der wenigsten zwei Antenneneinheiten umfasst, und das bereitgestellte Sendedatenpaket über die jeweilige Antenne zu senden. Ferner weist das Kraftfahrzeug ein Spiegelersatzsystem mit wenigstens einer Kamera auf, wobei das Kraftfahrzeug zusätzlich einen Netzwerk-Konzentrator aufweist, der im Betrieb Signale dieser wenigstens einen Kamera und Signale wenigstens einer der Antennen der wenigstens zwei Antenneneinheiten zu Übertragung kombiniert.

Die wenigstens zwei Antenneneinheiten empfangen während einer Kommunikationsphase eine Vielzahl von Datenpaketen über die Netzwerkschnittstelle, sodass die zwei Antenneneinheiten digital an eine Einheit angebunden sind, die das zu empfangende Datenpaket bereitstellt. Durch die digitale Anbindung können die wenigstens zwei Antenneneinheiten an einer beliebigen Position an dem Kraftfahrzeug angeordnet werden. Insbesondere bei Nutzfahrzeugen wie beispielsweise LKWs, die zumeist aus einer Zugmaschine und einem Anhänger aufgebaut sind, ist davon auszugehen, dass die Anhänger häufig gewechselt und teilweise auch von Fremdfirmen bereitgestellt werden. Daher ist es vorteilhaft, Elemente der Kommunikationstechnik wie beispielsweise V2X, Wifi usw. an der Zugmaschine des Kraftfahrzeuges anzuordnen. Um vorteilhaft eine Abdeckung der Kommunikation in mehrere Richtungen ausgehend von der Zugmaschine zu ermöglichen, ist es bevorzugt, wenn die wenigstens zwei Antenneneinheiten an unterschiedlichen Seitenflächen der Zugmaschine angeordnet sind, die die Zugmaschine definieren.

Vorzugsweise sind die wenigsten zwei Antenneneinheiten dazu ausgebildet, das Datenpaket synchron zu empfangen und/oder das Sendedatenpaket synchron zu senden.

Somit ist es möglich, eine omnidirektionale Charakteristik zu erreichen, weil die beiden Antenneneinheiten nicht einzeln betrieben werden, sondern im Verbund, und zwar synchronisiert. In Empfangsrichtung sind dann beispielsweise beide der wenigstens zwei Antenneneinheiten zeitgleich als Empfänger aktiv und decken jeweils eine der Seiten des Kraftfahrzeuges ab, die der Seitenfläche zugeordnet ist, an der die jeweilige Antenneneinheit angeordnet ist. Die empfangenen Signale werden dekodiert und auf Daten- bzw. Paketebene zu einer zentralen Steuereinheit übertragen. Im günstigsten Fall haben beide Antenneneinheiten das gleiche Datenpaket vollständig empfangen, sodass es redundant vorliegt. Solche redundanten Datenpakete können von der zentralen Steuereinheit verworfen werden. Empfängt jedoch eine Antenneneinheit ein Datenpaket fehlerhaft, d. h. die CRC-Checksumme stimmt nicht mit den Daten überein, kann dieses Datenpaket an die zentrale Steuereinheit gesendet werden. Denn entweder hat die zweite Antenneneinheit das Datenpaket vollständig und korrekt empfangen, sodass das fehlerhafte Datenpaket verworfen werden kann, oder beide Antenneneinheiten haben das Datenpaket fehlerhaft empfangen, sodass sie nach Übertragung zur zentralen Steuereinheit durch Kombination auf Bit-Ebene rekonstruierbar sind. In diesem Fall ist es vorteilhaft, wenn beiden Antenneneinheiten die gleiche Netzwerkadresse zugeordnet ist.

Vorteilhaft sind die wenigstens zwei Antenneneinheiten auf gegenüberliegenden Seitenflächen der Zugmaschine, insbesondere eine erste Antenneneinheit auf einer rechten und eine zweite Antenneneinheit auf einer linken Seite eines Fahrerhauses der Zugmaschine, angeordnet.

Sind die beiden Antenneneinheiten rechts und links seitlich an dem Kraftfahrzeug angeordnet, können sie eine Abdeckung der Kommunikation für beide den Seitenflächen zugeordneten Seiten gewährleisten und damit möglichst auch die gesamte Abdeckung rund um das Kraftfahrzeug, eventuell sogar inklusive Anhänger.

Durch die digitale Anbindung der Antenneneinheiten über die Netzwerkschnittstellen ist die weiträumige Verteilung der Antenneneinheiten über das Kraftfahrzeug möglich, wohingegen eine solche Kombination auf Basis von drahtgebundenen Verbindungen bislang eher ungeeignet war. Eine mögliche Verbindung zwischen den Antenneneinheiten und der zentralen Steuereinheit kann zum Beispiel durch Ethernet bzw. BroadR-Reach erreicht werden. Ebenso ist es möglich, die Antenneneinheiten mit unterschiedlichen Übertragungsmedien anzufahren, beispielsweise könnten die Antenneneinheiten via USB oder auch mit BroadR-Reach verbunden sein. Jitter etc. kann durch Synchronisation aller Antenneneinheiten mit der zentralen Steuereinheit über die jeweiligen Übertragungsmedien hinweg kompensiert werden. Vorteilhaft ist es weiter möglich, Paket-Buffer in den jeweiligen Antenneneinheiten vorzusehen.

Vorzugsweise sind die wenigstens zwei Antenneneinheiten jeweils in einen Außenspiegel oder in einen Kameraarm des Spiegelersatzsystems integriert.

Zumindest eine der beiden Antenneneinheiten können somit in einem Kameraarm eines Spiegelersatzsystems mit einer oder mehreren Kameras des Spiegelersatzsystems verbaut sein. Die Antenneneinheit ist dabei digital mit der zentralen Steuereinheit des Kraftfahrzeuges verbunden.

Mittels des Netzwerk-Konzentrators, beispielsweise ein Switch, ein Hub usw., können die digitalen Signale der Kamera bzw. der mehreren Kameras und der Antenne bzw. Antennen zur Übertragung kombiniert werden (beispielsweise gemultiplext, priorisiert). Dabei ist jegliche Kombination für die Platzierung von Steckern und Gehäusen denkbar. Beispielsweise könnten alle genannten Komponenten innerhalb des Kameraarms separate Gehäuse besitzen, ebenso sind jedoch auch Kombinationen von Komponenten und Steckern in einem Gehäuse möglich. So ist beispielsweise die Platzierung des Netzwerksswitches gemeinsam mit einer der Antenneneinheiten inklusive der Steckverbindung für die Kameras in einem Gehäuse denkbar. Die Stromversorgung der einzelnen Komponenten könnte dabei über eine der Digitalanbindungen oder auch einzeln erfolgen, beispielsweise über Power-over-ethernet, Power-over-coax, USB usw..

Vorzugsweise weisen die Antennen der wenigstens zwei Antenneneinheiten jeweils eine omnidirektionale oder eine gerichtete Antennencharakteristik auf.

Vorteilhaft weist wenigstens eine der zwei Antenneneinheiten wenigstens zwei Antennen auf, wobei eine erste der Antennen eine omnidirektionale Antennencharakteristik und eine zweite der Antennen eine gerichtete Antennencharakteristik aufweist.

Vorteilhaft weist die Antenneneinheit dabei eine Schalteinrichtung auf, um zwischen der ersten Antenne mit omnidirektionaler Antennencharakteristik und der zweiten Antenne mit gerichteter Antennencharakteristik umzuschalten. Dadurch können beide Antennencharakteristiken zum Beispiel miteinander kombiniert werden, sodass beispielsweise ein erster RF-Pfad auf die omnidirektionale Antennencharakteristik und ein zweiter RF-Pfad auf die gerichtete Antennencharakteristik gelegt wird. Je nach Konfiguration und Möglichkeiten eines Funkchipsatzes wie beispielsweise eines Funkmoduls können die beiden RF-Pfade per Diversity miteinander kombiniert werden. Hierdurch wird das System robuster gegen Fading-Effekte bei gleichzeitiger Erhöhung des Link-Budgets durch die gerichteten Antennencharakteristiken. Je nach Auslegung können auch mehrere Antennen eine Richtwirkung und/oder mehrere Antennen eine gerichtete Antennencharakteristik bzw. eine unterschiedliche Polarisation besitzen.

Die Antennen können über alle möglichen bekannten Mechanismen wie beispielsweise Switches oder Duplexer miteinander kombiniert werden, um einen optimalen Kompromiss zu finden.

Die unterschiedlichen Antennen können als Multibandantennen ausgelegt sein, um mehrere Dienste abzudecken oder einzelne Antennen können dediziert für einzelne Dienste wie beispielsweise Bluetooth, V2X oder W-LAN usw. ausgelegt sein. In diesem Fall ist es dann vorteilhaft, wenn den beiden Antenneneinheiten unterschiedliche Netzwerkadressen zum Bedienen der einzelnen Dienste zugeordnet sind.

Es ist vorteilhaft, wenn die einzelnen Antenneneinheiten mehrere Antennen aufweisen, um Diversity umzusetzen. Dabei können auch mehrere Bänder wie beispielsweise 2,4 GHz, 5 GHz usw. einzeln oder zeitgleich abgedeckt werden.

Neben der Kombinationsmöglichkeit von Antennen einer Antenneneinheit auf einer der vier Seitenflächen gibt es auch die Möglichkeit, übergreifend eine Kombination über mehrere Seitenflächen zu erzeugen. So kann z. B. eine der Antenneneinheiten beide Antennen nutzen, um möglichst performant bzw. robust ein lokales MRC-Diversity umzusetzen, während eine zweite der Antenneneinheiten eine Antenne einzeln im gleichen Band bzw. Dienst wie die gegenüberliegende Antenneneinheit aufweist und zusätzlich eine Antenne, die z. B. einen Rückkanal in einem anderen Band abbildet. Hierzu ist es vorteilhaft, wenn ein zugeordneter Chipsatz bekannte Features wie Dual Band Simultaneous- (DBS-) oder Dual Band Concurrent- (DBC-)Eigenschaften unterstützt.

Weiter ist es auch möglich, über eine Antenne die Umgebung vorausschauend nach anderen freien Bändern abzusuchen (Scanning). Besondere Vorteile ergeben sich je nach Möglichkeiten der hierfür eingesetzten Chipsätze. So können z.B. MIMO bzw. MU-MIMO sowie beamforming implementiert werden.

Die Umschaltung der Dienste bzw. die verschiedenen Abdeckungen können manuell oder automatisch dynamisch durchgeführt werden, sodass eine größtmögliche Gesamtdienst-Abdeckung gewährleistet wird. Hierzu können die zur Verfügung stehenden Highlevel-Informationen, Umgebungsdaten, GPS-Koordinaten, V2X-Maps und weitere Randbedingungen über Protokollvorschriften, Zeitvorgaben und Ressourcenverteilungen berücksichtigt werden. Darüber hinaus können gemeinsame Ressourcen wie Speicher in beispielsweise einer zentralen Steuereinheit übergreifend genutzt werden.

Insbesondere für eine V2X-Kommunikation wird eine omnidirektionale Gesamtantennen-Charakteristik für Kraftfahrzeuge benötigt, damit sich ein Sender und ein Empfänger in entsprechender Nähe unabhängig von deren Ausrichtung zueinander möglichst frühzeitig und möglichst häufig erreichen.

In einer vorteilhaften Ausgestaltung weist das Kraftfahrzeug einen an der Zugmaschine befestigten Anhänger auf, der eine weitere Antenneneinheit des Antennennetzwerkes aufweist, wobei der weiteren Antenneneinheit die gleiche Netzwerkadresse wie den beiden an der Zugmaschine angeordneten Antenneneinheiten zugeordnet ist. Die weitere Antenneneinheit weist wenigstens eine Antenne und eine Netzwerkschnittstelle auf, wobei die Netzwerkschnittstelle dazu ausgebildet ist, das an die an der Zugmaschine angeordneten Antenneneinheiten gesendete Datenpaket mit gleichem Dateninhalt zu empfangen, auf Basis des vorgegebenen Kommunikationsprotokolls ein Sendedatenpaket bereitzustellen, welches den Dateninhalt des empfangenen Datenpakets und die zugeordnete Netzwerkadresse der weiteren Antenneneinheit umfasst, und das bereitgestellte Sendedatenpaket über die Antenne zu senden.

Zusätzlich zu den beiden Antenneneinheiten an der Zugmaschine kann demnach auch eine weitere, abgesetzte Antenneneinheit zu dem Antennennetzwerk kombiniert werden. Eine bevorzugte Position im Sinne einer optimalen Rundstrahlcharakteristik für das gesamte Kraftfahrzeug ist dabei eine Rückwand des Anhängers, sodass der rückwärtige Raum, der normalerweise durch den Anhänger verdeckt bzw. ausbreitungstechnisch abgeschattet wird, besser erreicht werden kann.

Vorzugsweise weist daher die wenigstens eine Antenne der weiteren Antenneneinheit eine omnidirektionale Antennencharakteristik auf.

Vorteilhafte Ausgestaltungen der Erfindung werden nachfolgend anhand der beigefügten Zeichnungen näher erläutert. Dabei zeigt:
Fig. 1 eine schematische Draufsicht von oben auf ein Kraftfahrzeug mit einem Anhänger, einer Zugmaschine und einem Antennennetzwerk, das mehrere Antenneneinheiten aufweist;
Fig. 2 eine schematische Darstellung eines Spiegelersatzsystems, welches in dem Kraftfahrzeug aus Fig. 1 angeordnet ist;
Fig. 3 eine schematische Detaildarstellung des Kraftfahrzeuges aus Fig. 1 im Bereich der Zugmaschine in einer ersten Ausführungsform;
Fig. 4 eine schematische Detaildarstellung des Kraftfahrzeuges aus Fig. 1 im Bereich der Zugmaschine in einer zweiten Ausführungsform;
Fig. 5 eine schematische Draufsicht von oben auf das Kraftfahrzeug aus Fig. 1 mit mehreren Antenneneinheiten, die Antennen mit unterschiedlichen Antennencharakteristiken aufweisen; und
Fig. 6 ein schematisches Blockdiagramm für eine der Antenneneinheiten aus Fig. 5.

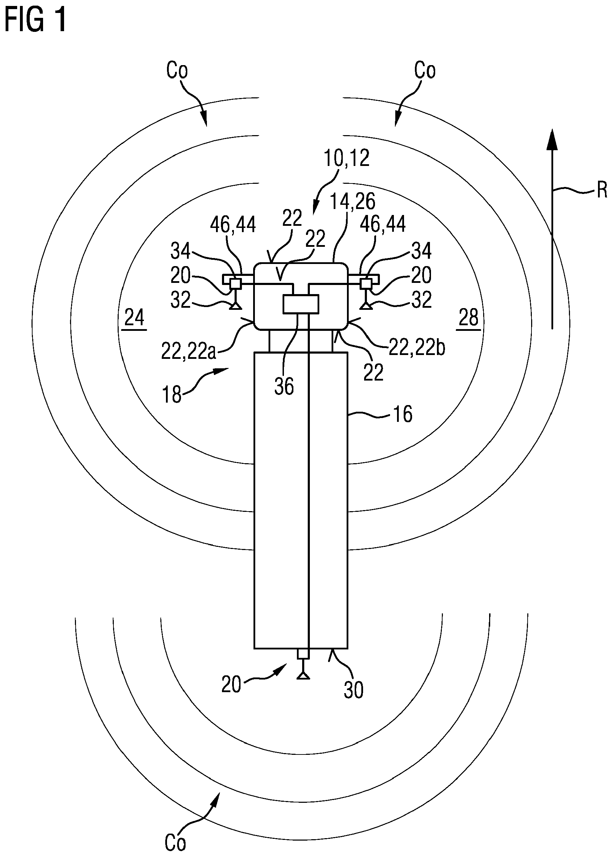

Fig. 1 zeigt eine schematische Draufsicht von oben auf ein Kraftfahrzeug 10, das in der vorliegenden Ausführungsform als Nutzfahrzeug 12, nämlich als ein LKW mit einer Zugmaschine 14 und einem Anhänger 16 ausgestaltet ist. Sämtliche nachfolgenden Beschreibungen sind jedoch auch auf andere Kraftfahrzeuge 10 wie beispielswiese Baumaschinen oder Landmaschinen wie Traktoren anwendbar.

Das Kraftfahrzeug 10 weist ein Antennennetzwerk 18 auf, das in der vorliegenden Ausführungsform in Fig. 1 drei Antenneneinheiten 20 umfasst, wobei zwei Antenneneinheiten 20 an der Zugmaschine 14 und eine Antenneneinheit 20 an dem Anhänger 16 angeordnet sind. Dabei ist die Antenneneinheit 20 an dem Anhänger 16 lediglich optional vorgesehen.

Die Zugmaschine 14 wird von mehreren Seitenflächen 22 definiert, wovon eine erste Seitenfläche 22a in Fahrtrichtung R des Kraftfahrzeuges 10 eine linke Seite 24 eines Fahrerhauses 26 an der Zugmaschine 14 und eine zweite Seitenfläche 22b in Fahrtrichtung R des Kraftfahrzeuges 10 eine rechte Seite 28 des Fahrerhauses 26 bildet. Die beiden an der Zugmaschine 14 angeordneten Antenneneinheiten 20 sind dabei an unterschiedlichen Seitenflächen 22 angeordnet, nämlich eine auf der linken Seite 24 und eine auf der rechten Seite 28 des Fahrerhauses 26.

Die dritte, nur optional vorgesehene, Antenneneinheit 20 des Antennennetzwerkes 18 ist an einer Rückseite 30 des Anhängers 16 angeordnet.

Allen Antenneneinheiten 20 des Antennennetzwerks 18 ist in der vorliegenden Ausführungsform eine gleiche Netzwerkadresse zugeordnet, und jede der Antenneneinheiten 20 weist wenigstens eine Antenne 32 und eine Netzwerkschnittstelle 34 auf. Die Antenneneinheiten 20 sind digital an eine zentrale Steuereinheit 36 angebunden. Die Netzwerkschnittstellen 34 der Antenneneinheiten 20 sind so ausgebildet, dass sie ein an alle Antenneneinheiten 20 gesendetes Datenpaket mit gleichem Dateninhalt empfangen können, auf Basis eines vorgegebenen Kommunikationsprotokolls jeweils ein Sendedatenpaket bereitstellen können, das den Dateninhalt des empfangenen Datenpakets und die zugeordnete gleiche Netzwerkadresse aller Antenneneinheiten 20 umfasst, und das bereitgestellte Sendedatenpaket über die jeweilige Antenne 32 der zugeordneten Antenneneinheit 20 senden können. Da das gesendete Datenpaket über die jeweilige Netzwerkschnittstelle 34 empfangen werden kann und es sich somit um eine digitale Anbindung der Antenneneinheiten 20 handelt, können die Antenneneinheiten 20 an einer beliebigen Position an einem Kraftfahrzeug 10 angeordnet sein. Da alle gezeigten Antenneneinheiten 20 ihre Sendedatenpakete mit der gleichen Netzwerkadresse senden, kann auf einer Empfangsseite quasi ein Mehrwegeempfang erfolgen, d. h. es kommen mehrere Sendedatenpakete an, und somit ist eine zuverlässigere Kommunikationsverbindung möglich.

Dazu ist es vorteilhaft, wenn die Antenneneinheiten 20 dazu ausgebildet sind, das Datenpaket synchron zu empfangen und/oder das Sendedatenpaket synchron zu senden.

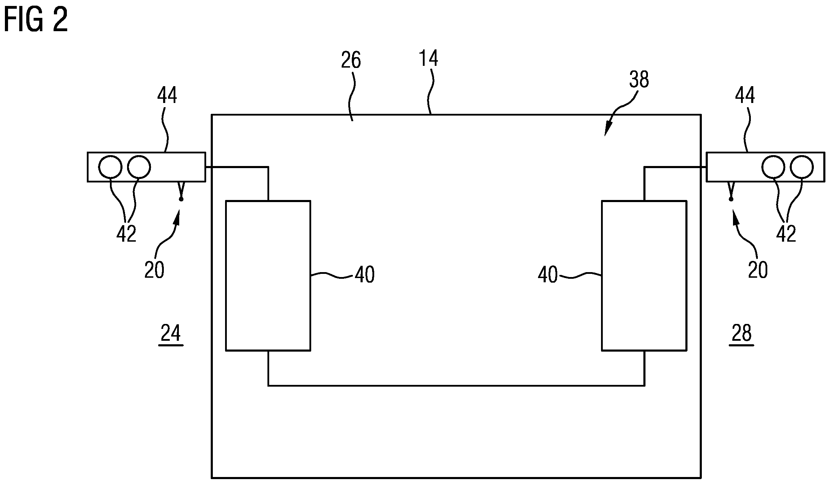

In einer besonders vorteilhaften Ausgestaltung des Kraftfahrzeugs 10 handelt es sich um ein Nutzfahrzeug 12, das ein Spiegelersatzsystem 38 aufweist, welches schematisch in Fig. 2 dargestellt ist. Das Spiegelersatzsystem 38 befindet sich vorzugsweise an der Zugmaschine 14 und weist zumeist zwei Monitore 40 auf, die jeweils ein Display für die linke Seite 24 bzw. die rechte Seite 28 des Fahrerhauses 26 bilden. Die Monitore 40 zeigen dabei Aufnahmen von Kameras 42, die außerhalb des Fahrerhauses 26 an einem entsprechenden Kameraarm 44 angeordnet sind und Aufnahmen der Umgebung erzeugen. Die Antenneneinheiten 20 sind, wie in Fig. 2 gezeigt, vorteilhaft in einem solchen Kameraarm 44 integriert. Alternativ oder zusätzlich ist selbstverständlich auch eine Integration der Antenneneinheiten 20 in einen einfachen Außenspiegel 46 möglich.

In den Monitoren 40 des Spiegelersatzsystems 38 ist jeweils eine nicht gezeigte ECU vorhanden, wobei die ECUs mittels Ethernet bzw. BroadR-Reach miteinander verbunden sind. In einer Variante kann das Spiegelersatzsystem 38 auch aus einer zentralen ECU statt zwei ECUs jeweils hinter den Monitoren 40 bestehen So werden die benötigten Leitungswege zu den Kameraarmen 44 minimiert. Das Spiegelersatzsystem 38 mit den beiden gezeigten ECUs kann beide Antenneneinheiten 20 erreichen. Dabei können die Antenneneinheiten 20 so ausgelegt sein, dass sie beispielsweise die Integration von V2X ermöglichen, wobei die Ressourcen des Spiegelersatzsystems 38 dazu genutzt werden, ein V2X-System umzusetzen oder aber eine Weiterleitung auf Paketebene an andere ECUs oder von anderen ECUs an die Antenneneinheiten 20 implementieren. Ebenso können die Antenneneinheiten 20 in Fig. 2 eine drahtlose Videoübertragung besonders geeignet umsetzen, um z. B. eine externe drahtlose mobile Rückfahrkamera performant und ressourcenoptimiert einzubinden.

Durch die digitale Anbindung ist kein Kompensor, d. h. keine Nachverstärkung im analogen Bereich, nötig, während Verstärker und LNA direkt in der Nähe der Antennen 32 eine optimale Performance ohne Leistungsverluste erlauben und eine Architektur in einer abgesetzten Antenneneinheit 20 an der Rückseite 30 des Anhängers 16 überhaupt erst ermöglichen.

Wie bereits erwähnt, können die Antenneneinheiten 20 statt in den Kameraarmen 44 auch an konventionellen Außenspiegeln 46 oder einfach seitlich am Führerhaus 26 oder auch auf dessen Dach angeordnet sein.

Es ist möglich, Technologien wie beispielsweise UWB, 433 MHz-Module für TPMS (Tire-Pressure-Monitoring System), Schlüsselfunk usw. unterzubringen.

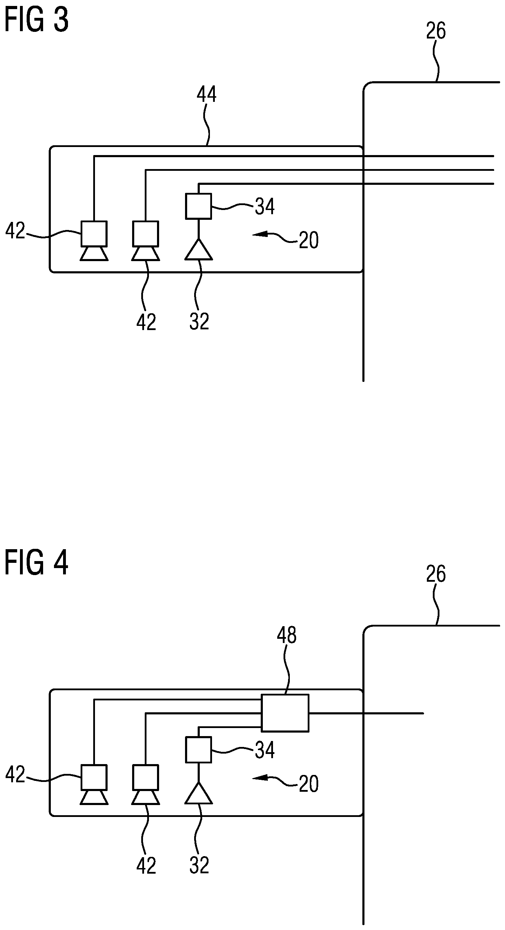

Fig. 3 zeigt eine schematische Detaildarstellung einer ersten Ausführungsform einer Anordnung einer Antenneneinheit 20 in einem Kameraarm 44 des Spiegelersatzsystems 38. Dabei sind sowohl die Kameras 42, die in dem Kameraarm 44 angeordnet sind, als auch die Antenneneinheit 20 separat digital in dem Kraftfahrzeug 10 angebunden.

Fig. 4 zeigt eine schematische Detaildarstellung einer zweiten Ausführungsform einer Anordnung einer Antenneneinheit 20 in einem Kameraarm 44 des Spiegelersatzsystems 38, wobei ein Netzwerk-Konzentrator 48 vorgesehen ist, der im Betrieb sowohl die Signale der beiden Kameras 42 als auch die Signale der Antenneneinheit 20 zur Übertragung kombiniert.

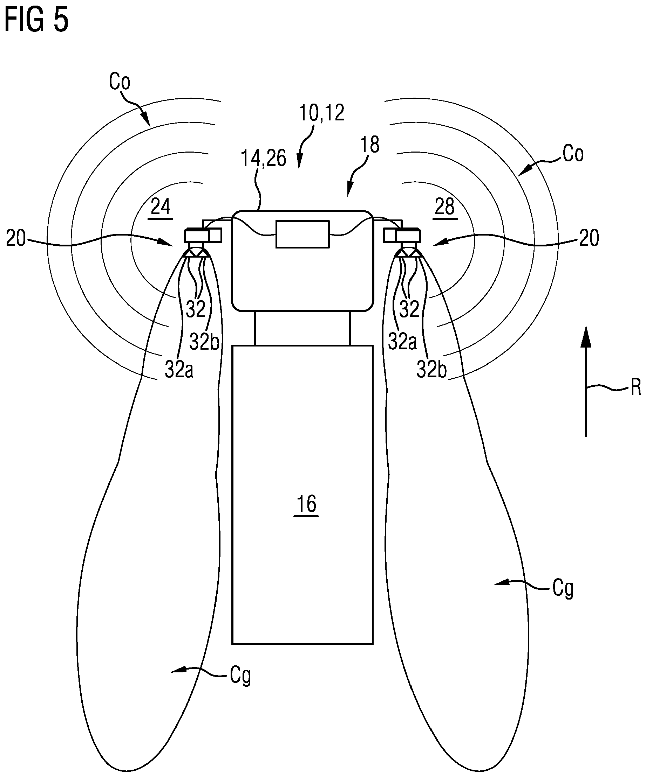

Fig. 5 zeigt eine schematische Draufsicht auf das Kraftfahrzeug 10 aus Fig. 1, bei dem auf jeder Seite 24, 28 eine Antenneneinheit 20 mit jeweils zwei Antennen 32 angeordnet ist, wobei in jeder Antenneneinheit 20 eine erste Antenne 32a eine omnidirektionale Antennencharakteristik Co und eine zweite Antenne 32b eine gerichtete Antennencharakteristik Cg aufweist. Für jede Seite 24, 28 des Kraftfahrzeuges 10 sind somit zwei verschiedene Antennencharakteristiken Co, Cg vorhanden, wobei die gerichtete Antennencharakteristik Cg eine starke Richtwirkung, in diesem Fall nach hinten, aufweist, was eine optimierte Datenübertragung nach hinten z. B. für eine hinten am Kraftfahrzeug 10 angebrachte Kamera 42 mit Drahtloskommunikation ermöglicht. Darüber hinaus können beispielsweise Videodaten zu anderen, hinter dem Kraftfahrzeug 10 fahrenden Kraftfahrzeugen performanter gestreamt werden. Beispielsweise bei Platoon-Anwendungen im Bereich des automatisierten Fahrens kann dadurch eine Kommunikation im Fahrzeugverbund optimiert werden.

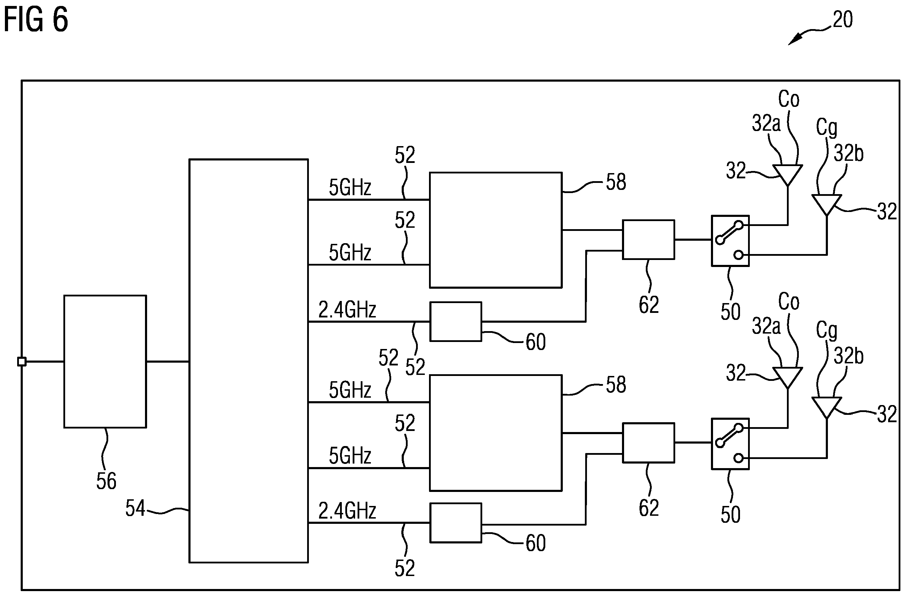

Fig. 6 zeigt ein schematisches Blockdiagramm eine der Antenneneinheiten 20 aus Fig. 5.

Die Antenneneinheit 20 in Fig. 6 weist Antennen 32 auf, die für verschiedene Anwendungsfälle umschaltbar sind, wozu jeweils eine Schalteinrichtung 50 vorgesehen ist. Es kann dabei zwischen einer Antenne 32 mit omnidirektionaler Antennencharakteristik Co und einer Antenne 32 mit gerichteter Antennencharakteristik Cg umgeschaltet werden. In den Blockdiagrammen in Fig. 6 ist es möglich, die Antennen 32 über unterschiedliche RF-Pfade 52 zu kombinieren. Die Antenneneinheit 20 weist in Fig. 6 einen WIFI-Chipsatz 54 auf, der über eine Busanbindung 56 angesteuert wird. Der WIFI-Chipsatz 54 ist eine 2x2-Variante, wobei die RF-Pfade 52 (5 GHz Empfang und Senden und 2,4 GHz) jeweils zweimal vorhanden sind. Der WIFI-Chipsatz 54 unterstützt in der vorliegenden Ausführungsform sowohl klassisches WLAN als auch V2X bzw. DSRC (Dedicated Short Range Communication). Für die 5 GHz RF-Pfade 52 ist ein Frontend 58 vorhanden, das einen externen Verstärker, LNA (Low Noise Amplifier), ein schaltbares Filter für DSRC sowie eine Umschaltung zwischen Senden und Empfangen aufweist.

Vor den 2,4 GHz RF-Pfad 52 ist ein Bandpassfilter 60 geschaltet. Die RF-Pfade 52 werden über einen Duplexer 62 zusammengeführt, sodass die jeweils beiden Antennen 32 den RF-Pfaden 52 jeweils zugeführt werden können.

Die Busanbindung 56 bzw. Netzwerkanbindung ist nur beispielhaft gezeigt, die Anbindung kann auch beispielsweise über einen Serializer bzw. Repeater stattfinden. Die Antennennetzwerke 20 könnten auch direkt z. B. über USB, verbunden sein. Idealerweise wird in den Antenneneinheiten 20 kein externer Prozessor benötigt, sondern lediglich der WIFI-Chipsatz 54 mit seinem internen Prozessor.

Wenn die Antenneneinheiten 20 lokal mehrere Antennen 32 aufweisen, ist es möglich, Diversity umzusetzen, mehrere Bänder wie 2,4 GHz, 5 GHz einzeln oder zeitgleich abzudecken und unterschiedliche Antennencharakteristiken Co, Cg bereitzustellen. Diversity wird nur einen geringen Gewinn bringen, falls die rechte Seite 28 und die linke 24 des Kraftfahrzeuges 10 analog kombiniert werden würden. Dies wäre zu erwarten, da die Signale auf der rechten Seite 28 und der linken Seite 24 sehr unterschiedlich sind, da sie unterschiedlichen Ausbreitungsverhältnissen ausgesetzt sind durch das Vorhandensein von Häusern, Autos usw.. Ein lokales Diversity und ein anschließendes Diversity der rechten Seite 28 und der linken Seite 24 auf digitaler Ebene erbringt dagegen deutliche Performancegewinne, insbesondere bei Nutz-,Signalisierungs-, oder Protokolldaten. Durch die mögliche Kombination fehlerhafter Datenpakete der beiden Seiten 24, 28 wird die Robustheit gesteigert. Es ist auch möglich, unterschiedliche Antennencharakteristiken Co, Cg anzuwenden und dynamisch zu kombinieren. Es kann hier vorteilhaft sein, den Antenneneinheiten 20 unterschiedliche Netzwerkadressen zuzuordnen, um so unterschiedliche Dienste bedienen zu können.

## Patentansprüche

1. Kraftfahrzeug (10), aufweisend eine von wenigstens vier Seitenflächen (22) definierte Zugmaschine (14) und ein Antennennetzwerk (18) mit wenigstens zwei Antenneneinheiten (20), denen eine gleiche Netzwerkadresse zugeordnet ist, wobei die wenigstens zwei Antenneneinheiten (20) an unterschiedlichen Seitenflächen (22) der wenigstens vier Seitenflächen (22) der Zugmaschine (14) angeordnet sind, wobei die wenigstens zwei Antenneneinheiten (20) jeweils wenigstens eine Antenne (32) und eine Netzwerkschnittstelle (34) aufweisen, wobei die Antenneneinheiten (20) über die Netzwerkschnittstellen (34) digital an eine zentrale Steuereinheit (36) angebunden sind und wobei die Netzwerkschnittstellen (34) der Antenneneinheiten (20) jeweils dazu ausgebildet sind
- ein an die wenigstens zwei Antenneneinheiten (20) gesendetes Datenpaket mit gleichem Dateninhalt jeweils zu empfangen,
- auf Basis eines vorgegebenen Kommunikationsprotokolls jeweils ein Sendedatenpaket bereitzustellen, das den Dateninhalt des empfangenen Datenpakets und die zugeordnete, gleiche Netzwerkadresse der wenigstens zwei Antenneneinheiten (20) umfasst,
- das bereitgestellte Sendedatenpaket über die jeweilige Antenne (32) zu senden,
das Kraftfahrzeug (10) ferner aufweisend ein Spiegelersatzsystem (38) und **gekennzeichnet durch** wenigstens eine Kamera (42) des Spiegelersatzsystems (38) und einen Netzwerk-Konzentrator (48), der dazu ausgebildet ist, im Betrieb Signale der wenigstens einen Kamera (42) und Signale wenigstens einer der Antennen (32) der wenigstens zwei Antenneneinheiten (20) zur Übertragung zu kombinieren.

2. Kraftfahrzeug (10) nach Anspruch 1,
**dadurch gekennzeichnet, dass** die wenigstens zwei Antenneneinheiten (20) dazu ausgebildet sind, das Datenpaket synchron zu empfangen und/oder das Sendedatenpaket synchron zu senden.

3. Kraftfahrzeug (10) nach einem der Ansprüche 1 oder 2,
**dadurch gekennzeichnet, dass** die wenigstens zwei Antenneneinheiten (20) auf gegenüberliegenden Seitenflächen (22) der Zugmaschine (14) angeordnet sind.

4. Kraftfahrzeug (10) nach einem der Ansprüche 1 bis 3,
**dadurch gekennzeichnet, dass** die wenigstens zwei Antenneneinheiten (20) jeweils in einen Außenspiegel (46) oder in einen Kameraarm (44) des Spiegelersatzsystems (38) integriert sind.

5. Kraftfahrzeug (10) nach einem der Ansprüche 1 bis 4,
**dadurch gekennzeichnet, dass** die Antennen (32) der wenigstens zwei Antenneneinheiten (20) jeweils eine omnidirektionale (Co) oder eine gerichtete Antennencharakteristik (Cg) aufweisen.

6. Kraftfahrzeug (10) nach einem der Ansprüche 1 bis 5,
**dadurch gekennzeichnet, dass** wenigstens eine der Antenneneinheiten (20) wenigstens zwei Antennen (32) aufweist, wobei eine erste der Antennen (32) eine omnidirektionale Antennencharakteristik (Co) und eine zweite der Antennen (32) eine gerichtete Antennencharakteristik (Cg) aufweist.

7. Kraftfahrzeug (10) nach Anspruch 6,
**dadurch gekennzeichnet, dass** die Antenneneinheit (20) eine Schalteinrichtung (50) aufweist, um zwischen der ersten Antenne (32a) mit omnidirektionaler Antennencharakteristik (Co) und der zweiten Antenne (32b) mit gerichteter Antennencharakteristik (Cg) umzuschalten.

8. Kraftfahrzeug (10) nach einem der Ansprüche 1 bis 7,
**gekennzeichnet durch** einen an der Zugmaschine (10) befestigten Anhänger (16), der eine weitere Antenneneinheit (20) des Antennennetzwerkes (18) aufweist, wobei der weiteren Antenneneinheit (20) die gleiche Netzwerkadresse wie den beiden an der Zugmaschine (14) angeordneten Antenneneinheiten (20) zugeordnet ist, wobei die weitere Antenneneinheit (20) wenigstens eine Antenne (32) und eine Netzwerkschnittstelle (34) aufweist, wobei die Netzwerkschnittstelle (34) dazu ausgebildet ist
- das an die an der Zugmaschine (14) angeordneten Antenneneinheiten (20) gesendete Datenpaket mit gleichem Dateninhalt zu empfangen,
- auf Basis des vorgegebenen Kommunikationsprotokolls ein Sendedatenpaket bereitzustellen, das den Dateninhalt des empfangenen Datenpakets und die zugeordnete Netzwerkadresse der weiteren Antenneneinheit (20) umfasst,
- das bereitgestellte Sendedatenpaket über die Antenne (32) zu senden.

9. Kraftfahrzeug (10) nach Anspruch 8,
**dadurch gekennzeichnet, dass** die wenigstens eine Antenne (32) der weiteren Antenneneinheit (20) eine omnidirektionale Antennencharakteristik (Co) aufweist.

## Claims

1. Motor vehicle (10) having a towing vehicle (14) defined by at least four side surfaces (22) and an antenna network (18) with at least two antenna units (20) which are assigned an identical network address, wherein the at least two antenna units (20) are arranged on different side surfaces (22) of the at least four side surfaces (22) of the towing vehicle (14), wherein the at least two antenna units (20) each have at least one antenna (32) and one network interface (34), wherein the antenna units (20) are digitally connected to a central control unit (36) via the network interfaces (34), and wherein the network interfaces (34) of the antenna units (20) are each designed
- to respectively receive a data packet with the same data content transmitted to the at least two antenna units (20),
- to respectively provide, on the basis of a specified communication protocol, a transmission data packet which comprises the data content of the received data packet and the assigned, identical network address of the at least two antenna units (20),
- to transmit the transmission data packet provided via the respective antenna (32),
the motor vehicle (10) also having a mirror replacement system (38) and **characterized by** at least one camera (42) of the mirror replacement system (38) and a network concentrator (48) which is designed, during operation, to combine signals from the at least one camera (42) and signals from at least one of the antennas (32) of the at least two antenna units (20) for transmission.

2. Motor vehicle (10) according to Claim 1,
**characterized in that** the at least two antenna units (20) are designed to receive the data packet synchronously and/or to transmit the transmission data packet synchronously.

3. Motor vehicle (10) according to either of Claims 1 and 2,
**characterized in that** the at least two antenna units (20) are arranged on opposite side surfaces (22) of the towing vehicle (14).

4. Motor vehicle (10) according to one of Claims 1 to 3,
**characterized in that** the at least two antenna units (20) are each integrated in an exterior mirror (46) or in a camera arm (44) of the mirror replacement system (38).

5. Motor vehicle (10) according to one of Claims 1 to 4,
**characterized in that** the antennas (32) of the at least two antenna units (20) each have an omnidirectional antenna characteristic (Co) or a directional antenna characteristic (Cg).

6. Motor vehicle (10) according to one of Claims 1 to 5,
**characterized in that** at least one of the antenna units (20) has at least two antennas (32), wherein a first of the antennas (32) has an omnidirectional antenna characteristic (Co) and a second of the antennas (32) has a directional antenna characteristic (Cg).

7. Motor vehicle (10) according to Claim 6,
**characterized in that** the antenna unit (20) has a switching device (50) to switch between the first antenna (32a) with the omnidirectional antenna characteristic (Co) and the second antenna (32b) with the directional antenna characteristic (Cg).

8. Motor vehicle (10) according to one of Claims 1 to 7,
**characterized by** a trailer (16) which is fastened to the towing vehicle (10) and has a further antenna unit (20) of the antenna network (18), wherein the further antenna unit (20) is assigned the same network address as the two antenna units (20) arranged on the towing vehicle (14), wherein the further antenna unit (20) has at least one antenna (32) and one network interface (34), wherein the network interface (34) is designed
- to receive the data packet with the same data content transmitted to the antenna units (20) arranged on the towing vehicle (14),
- to provide, on the basis of the specified communication protocol, a transmission data packet which comprises the data content of the received data packet and the assigned network address of the further antenna unit (20),
- to transmit the transmission data packet provided via the antenna (32).

9. Motor vehicle (10) according to Claim 8,
**characterized in that** the at least one antenna (32) of the further antenna unit (20) has an omnidirectional antenna characteristic (Co).

## Revendications

1. Véhicule automobile (10), présentant un véhicule tracteur (14) défini par au moins quatre surfaces latérales (22), et un réseau d'antennes (18) muni d'au moins deux unités d'antenne (20) auxquelles est attribuée la même adresse réseau, dans lequel les au moins deux unités d'antenne (20) sont disposées sur différentes surfaces latérales (22) des au moins quatre surfaces latérales (22) du véhicule tracteur (14), dans lequel les au moins deux unités d'antenne (20) présentent respectivement au moins une antenne (32) et une interface de réseau (34), dans lequel les unités d'antenne (20) sont reliées de manière numérique à une unité de commande centrale (36) par l'intermédiaire des interfaces de réseau (34), et dans lequel les interfaces de réseau (34) des unités d'antenne (20) sont respectivement réalisées pour
- recevoir respectivement un paquet de données ayant le même contenu de données et envoyé auxdites au moins deux unités d'antenne (20),
- sur la base d'un protocole de communication prédéfini, fournir respectivement un paquet de données d'envoi qui comprend le contenu de données du paquet de données reçu et la même adresse de réseau associée des au moins deux unités d'antenne (20),
- envoyer le paquet de données d'envoi fourni par l'intermédiaire de l'antenne respective (32),
dans lequel le véhicule automobile (10) présente en outre un système de remplacement de miroir (38), et
**caractérisé par** au moins une caméra (42) du système de remplacement de miroir (38) et un concentrateur de réseau (48) qui est réalisé pour combiner en cours de fonctionnement des signaux de ladite au moins une caméra (42) et des signaux d'au moins l'une des antennes (32) des au moins deux unités d'antenne (20) pour la transmission.

2. Véhicule automobile (10) selon la revendication 1, **caractérisé en ce que** les au moins deux unités d'antenne (20) sont réalisées pour recevoir le paquet de données de manière synchrone et/ou pour envoyer le paquet de données d'envoi de manière synchrone.

3. Véhicule automobile (10) selon l'une quelconque des revendications 1 ou 2, **caractérisé en ce que** les au moins deux unités d'antenne (20) sont disposées sur des surfaces latérales opposées (22) du véhicule tracteur (14).

4. Véhicule automobile (10) selon l'une quelconque des revendications 1 à 3, **caractérisé en ce que** les au moins deux unités d'antenne (20) sont respectivement intégrées dans un miroir extérieur (46) ou dans un bras de caméra (44) du système de remplacement de miroir (38).

5. Véhicule automobile (10) selon l'une quelconque des revendications 1 à 4, **caractérisé en ce que** les antennes (32) des au moins deux unités d'antenne (20) présentent respectivement un diagramme de rayonnement d'antenne omnidirectionnel (Co) ou directif (Cg).

6. Véhicule automobile (10) selon l'une quelconque des revendications 1 à 5, **caractérisé en ce qu'**au moins l'une des unités d'antenne (20) présente au moins deux antennes (32), dans lequel une première des antennes (32) présente un diagramme de rayonnement d'antenne omnidirectionnel (Co) et une deuxième des antennes (32) présente un diagramme de rayonnement d'antenne directif (Cg).

7. Véhicule automobile (10) selon la revendication 6, **caractérisé en ce que** l'unité d'antenne (20) présente un moyen de commutation (50) pour commuter entre la première antenne (32a) à diagramme de rayonnement d'antenne omnidirectionnel (Co) et la deuxième antenne (32b) à diagramme de rayonnement d'antenne directif (Cg).

8. Véhicule automobile (10) selon l'une quelconque des revendications 1 à 7, **caractérisé par** une remorque (16) fixée au véhicule tracteur (10) et qui présente une autre unité d'antenne (20) du réseau d'antennes (18), dans lequel la même adresse de réseau qu'aux deux unités d'antenne (20) disposées sur le véhicule tracteur (14) est attribuée à l'autre unité d'antenne (20), dans lequel l'autre unité d'antenne (20) présente au moins une antenne (32) et une interface de réseau (34), l'interface de réseau (34) étant réalisée pour
- recevoir le paquet de données ayant le même contenu de données et envoyé aux unités d'antenne (20) disposées sur le véhicule tracteur (14),
- sur la base du protocole de communication prédéfini, fournir un paquet de données d'envoi qui comprend le contenu de données du paquet de données reçu et l'adresse de réseau attribuée de l'autre unité d'antenne (20),
- envoyer le paquet de données d'envoi fourni par l'intermédiaire de l'antenne (32).

9. Véhicule automobile (10) selon la revendication 8, **caractérisé en ce que** ladite au moins une antenne (32) de l'autre unité d'antenne (20) présente un diagramme de rayonnement d'antenne omnidirectionnel (Co).
